Europäisches Patentamt

European Patent Office

Office européen des brevets

(19)

(11) Veröffentlichungsnummer: **0 048 305**
**B1**

(12) **EUROPÄISCHE PATENTSCHRIFT**

(45) Veröffentlichungstag der Patentschrift:
02.01.85

(51) Int. Cl.³: **G 01 L 1/08**

(21) Anmeldenummer: **80105748.0**

(22) Anmeldetag: **24.09.80**

(54) Verfahren zur Kraftmessung und kraftabhängiger Frequenzwandler.

(43) Veröffentlichungstag der Anmeldung:
**31.03.82 Patentblatt 82/13**

(45) Bekanntmachung des Hinweises auf die Patenterteilung:
**02.01.85 Patentblatt 85/1**

(84) Benannte Vertragsstaaten:
**BE CH FR GB LI LU NL**

(56) Entgegenhaltungen:
**FR - A - 2 119 358**
**US - A - 1 746 627**
**US - A - 3 185 232**
**US - A - 3 816 156**

(73) Patentinhaber: **Ingenieurbüro für elektromechanische Technologien Dipl.-Ing. Hartmut Euer,
Zugspitzstrasse 11, D-8035 Gauting (DE)**

(72) Erfinder: **Borberg, Hartmut, Ing. grad.,
Meier-Helmbrecht-Strasse 12, D-8000 München 70 (DE)**

(74) Vertreter: **Kern, Wolfgang, Dipl.-Ing. Patentanwälte,
Dipl.-Ing. Herbert Tischer Dipl.-Ing. Wolfgang Kern
Dipl.-Chem. Dr. H.P. Brehm
Albert-Rosshaupter-Strasse 65, D-8000 München 70 (DE)**

**Beschreibung**

Die Erfindung betrifft ein im Oberbegriff des Anspruchs 1 beschriebenes Verfahren sowie einen kraftabhängigen Frequenzwandler zur Durchführung des Verfahrens gemäß dem Oberbegriff des Anspruches 5.

Neben mechanischen Kraftmeßverfahren, die wegproportionale Federelemente beinhalten, sind elektro-magnetische Kraftmeßverfahren bekannt, bei denen das mechanische Federelement elektromagnetisch nachgebildet wird, z. B. durch einen bestromten elektrischen Leiter in einem Magnetfeld. Hierbei wird entweder die magnetische Feldstärke wegabhängig gemacht, oder die Bestromung wird wegproportional geändert. Beide Verfahren beinhalten neben einer meßtechnisch auswertbaren Leiterbestromung ein Wegmeßsystem. Entweder die Weg-Meßgröße oder der Leiterstrom wird als Maß für die zu bestimmende Kraft ausgewertet. Der Meßausgang ist eine analoge Meßspannung. Um eine genügend hohe Kraft pro Volumeneinheit erzeugen zu können, wird das Magnetfeld von hochwertigen Dauermagneten erzeugt. Derartige Kraftmeßsysteme sind Feder-Masse-Systeme 2. Ordnung. Zur Erzielung eines bestimmten Frequenzganges müssen sie dynamisch dem jeweiligen Meßproblem angepaßt werden.

Der Erfindung liegt die Aufgabe zugrunde, ein Kraft- bzw. Drehmomenten-Meß-Verfahren und -System zu schaffen, welche unter dem Gesichtspunkt der Aufwandminimierung ein digital einfach zu verarbeitendes, kraft- oder momentenproportionales Ausgangssignal liefern.

Diese Aufgabe wird durch die in den Ansprüchen 1 und 5 angegebenen Merkmale gelöst, und die Lösungen können gemäß den abhängigen Ansprüchen 2 bis 4 bzw. 6 und 7 vorteilhaft ausgestaltet werden.

Der Erfindung liegt die Erkenntnis zugrunde, daß bei Vernachlässigung parasitärer Fehlerquellen wie z. B. Lagerreibung die Summe aller Kräfte bzw. Momente, die auf einen beweglich gelagerten Trägheitskörper einwirken können, im Mittel Null ist, wenn die Position des beweglich gelagerten Körpers im Mittel nicht verändert wird. Der beweglich gelagerte Trägheitskörper selbst kann als Zwischenspeicher für kurzzeitig auftretende Differenzkräfte dienen. Die im Mittel aufgenommene Bewegungsenergie des Trägheitskörpers ist jedoch Null, wenn die mittlere Bewegungsgeschwindigkeit bzw. der mittlere Weg in bezug auf die Nullposition Null ist. Um den Trägheitskörper 1; 1a in einer bestimmten Position dynamisch zu fixieren, sind an seinen beiden, den Elektromagneten zugewandten Seiten Joche 2; 2a, 3; 3a aus ferromagnetischem Material angebracht, die mit den beiden stationär angeordneten Kernmagneten 4; 4a, 5; 5a jeweils einen Zugmagneten darstellen. Die beiden Zugmagneten können auf den Trägheitskörper jeweils in entgegengesetzten Richtungen eine Kraft ausüben. Ihre Erregung geschieht taktweise, so daß immer nur einer der Magneten eine Kraft auf den Trägheitskörper ausüben kann. Wenn die Ansteuerung der Magneten so vorgenommen wird, daß jeweils derjenige Magnet für die Zeitspanne eines Zeittaktes erregt wird, der zu Beginn des Taktes den größten Luftspalt aufgewiesen hat, so pendelt der Körper fortlaufend um eine bestimmte Nullposition. Die Taktzeit ist so bemessen, das der zurückgelegte Weg je Takt hinreichend klein gegenüber der Luftspaltlänge der Magneten ist.

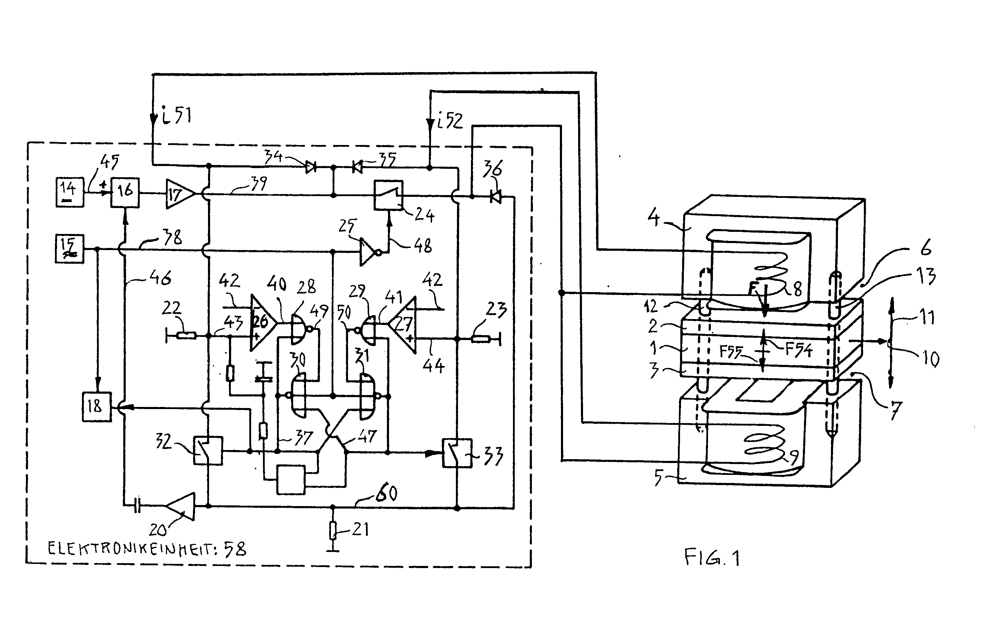

Wenn die mittlere Kraft je Zeittakt und Magnet einheitlich groß und konstant ist (F55 = F54 = const.); (F54a = F55a = const.), ergibt die Erregertaktfrequenz jedes der Magneten ein Maß für die von außen auf den Trägheitskörper einwirkende mittlere Kraft F̄. Für das translatorische System entsprechend Fig. 1 gilt:

$$f_{37} = \frac{f_{38}}{2}\left(1 - \frac{\bar{F}}{F_{54}}\right) \quad \text{bzw.} \quad f_{47} = \frac{f_{38}}{2}\left(1 - \frac{\bar{F}}{F_{54}}\right).$$

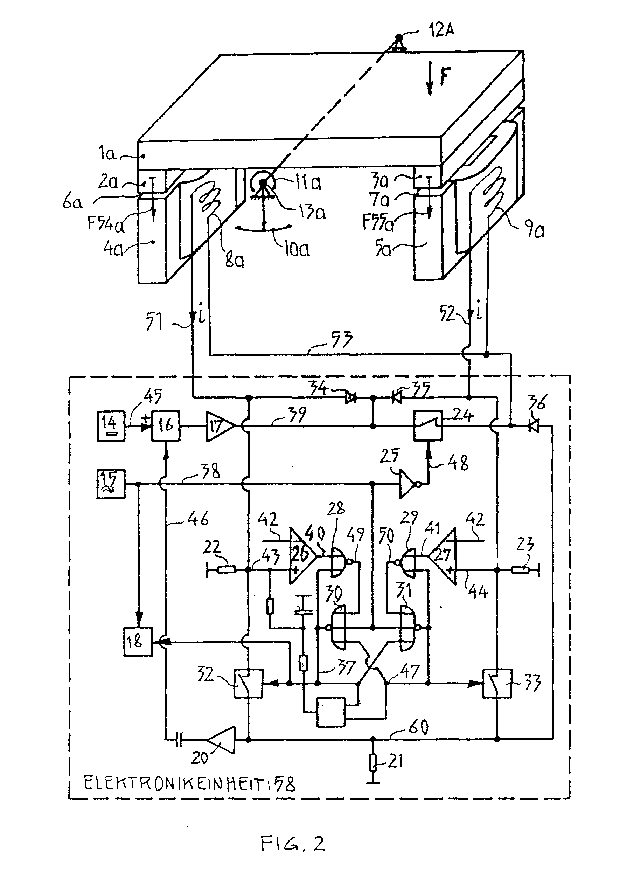

Für das rotatorische System entsprechend Fig. 2 gelten die analogen Beziehungen mit den entsprechenden Drehmomenten. Um aus dem Frequenz-Meßsignal einen digitalen Kraft- bzw. Drehmoment-Meßwert zu bilden, ist lediglich ein Frequenzzähler 18 erforderlich.

Meßtechnisch kann ein solches System wie ein System 1. Ordnung behandelt werden mit einer Totzeit, die einer vollen Taktperiode entspricht. Meßwertauflösung und -dynamik können durch Wahl der Tastzeit des Frequenzzählers variiert werden.

Als weitere Besonderheit der Erfindung ist kein gesondertes Wegmeßsystem erforderlich. Der Luftspaltvergleich zu Beginn jedes neuen Taktes zur Positionsbestimmung des beweglich gelagerten Körpers 1; 1a geschieht mit den Magnetspulen 8; 8a und 9; 9a. Da sich die Induktivität der Magnetspulen umgekehrt proportional zur Luftspaltgröße 6; 6a, 7; 7a ändert, wird der Luftspaltvergleich anhand eines Vergleiches der Anstiegsgeschwindigkeiten von Magnet-Meßströmen, die sich nach einer Spannungsbeaufschlagung der Magnetspulen ausbilden, durchgeführt. Derjenige Magnet, dessen Meßstrom als erster eine gegebene Schwelle erreicht, wird für den betreffenden Takt eingeschaltet. Zur Magnetkrafterzeugung wird an die Magnete eine Rechteckspannung angelegt, die zur Takthälfte umgepolt wird. Bei einem verlustlosen Erregerkreis bildet sich ein dreieckförmiger Strom aus, der am Anfang und am Ende des Taktes Null ist. Die mittlere Zugkraft je Takt ist dann unabhängig vom Luftspalt. Es gilt:

$$\bar{F} = \frac{1}{24\,\mu_0\,A}\ \left(\frac{U}{f\,N}\right)^2$$

mit

$\bar{F}$ — mittlere magnetische Zugkraft
$\mu_0$ — magnetische Feldkonstante
A — magnetisch aktiver Luftspaltquerschnitt
U — Erregerspannung
f — Taktfrequenz
N — Windungszahl der Magnetspule

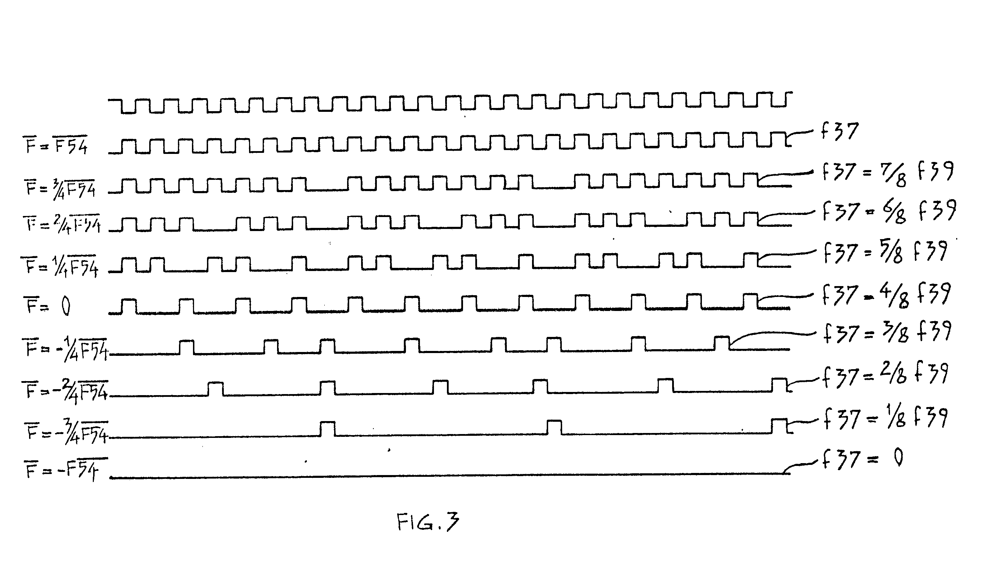

Ein Ausführungsbeispiel der Erfindung wird nachfolgend anhand der Darstellungen in den Fig. 1 bis Fig. 4 beschrieben.

Im translatorischen System nach Fig. 1 ist der Trägheitskörper 1 mit seinen Jochen 2, 3 mittels Führungsstiften 12, 13 in Bohrungen in den stationären Kernmagneten geführt, so daß er nur Bewegungen in Richtung des Doppelpfeils 11 ausführen kann. Im rotatorischen System nach Fig. 2 ist der Trägheitskörper 1a in Lagern 12a, 13a fest gegenüber den stationären Kernmagneten 4a, 5a gelagert und um die die Lager 11a, 12a verbindene Achslinie frei schwenkbar, was durch den Doppelpfeilbogen 10a angedeutet ist.

Der Taktgenerator erzeugt ein Rechtecksignal 38 konstanter Frequenz mit einem Tastverhältnis von 0,5. Der Takt beginnt mit der von 1 nach 0 gehenden Taktflanke.

Wenn Takt 38 Null ist, wird der elektronische Schalter 24 über den Inverter 25 eingeschaltet. Vor dem Einschalten sind beide Magnetströme i51 und i52 Null. Schalter 24 schaltet die Ausgangsspannung 39 vom Treiber 17 auf die beiden Magnetspulen 8; 8a und 9; 9a. Die Magnetspulen sind andererseits über hochohmige Widerstände 22 bzw. 23 mit Masse verbunden. Die sich ausbildenden Meßströme steigen nach einer Exponentialfunktion mit den Zeitkonstanten

$$T_4 = \frac{L_8}{R_{22}}\ ;\quad T_5 = \frac{L_9}{R_{23}}$$

an.

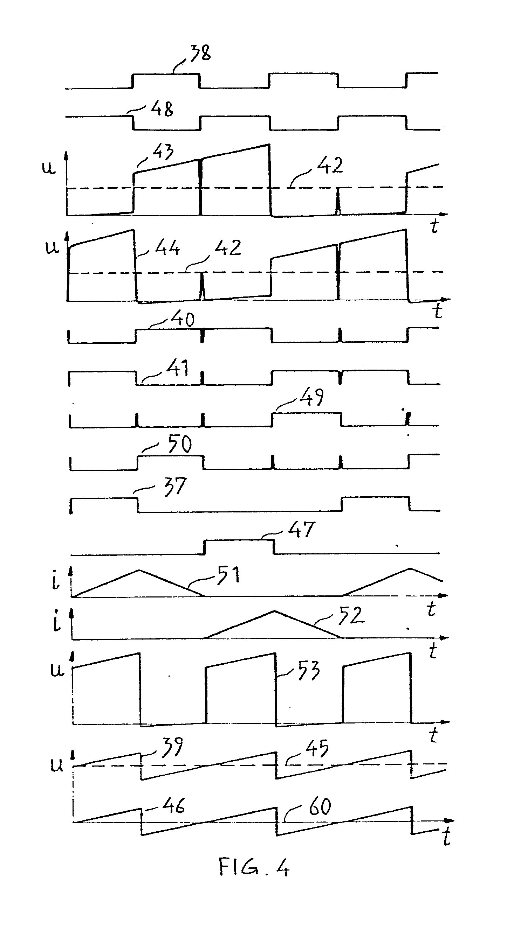

Wenn beide Magnete einander identisch sind und $R_{22}=R_{23}$ ist, dann sind die Zeitkonsten $T_4$ und $T_5$ lediglich variabel mit den Magnetluftspalten 6; 6a bzw. 7; 7a, die umgekehrt proportional die Spuleninduktivitäten $L_{8;\,8a}$ und $L_{9;\,9a}$ beeinflussen. Die Stromanstiegsgeschwindigkeit ist um so größer, je größer der Luftspalt ist. Da die Magnete als Zugmagnete ausgebildet sind, ist jeweils der Magnet mit dem größeren Luftspalt einzuschalten. Im Verlaufe eines Zeittaktes wird der Luftspalt dann durch Einwirken der Zugkraft auf den beweglich gelagerten Körper 1; 1a verkleinert. Derjenige Komparator 26 bzw. 27, dessen positiver Eingang 43 bzw. 44 als erster die Schaltspannung 42 erreicht, schaltet zuerst und triggert somit die Gatterschaltung, bestehend aus den Gattern 28 bis 31. Wenn z. B. Komparator 27 als erster schaltet, geht sein Ausgang 41 von 0 auf 1. Die Anfangszustände der Gatter gehen aus Fig. 4 hervor: Die Signale 38, 37, 40 und 41 sind 0, während die Ausgänge 49 und 50 der Gatter 28 und 29 eins sind. Nachdem 41 von 0 auf 1 geändert hat, geht 50 von 1 auf 0 und ändert somit den Ausgang von Gatter 31 von 0 auf 1. Damit wird der Schalter 33 eingeschaltet.

Schalter 33 schließt den Widerstand $R_{23}$ kurz, wodurch der Komparatorausgang 41 zurück auf 0 schaltet. Die Schaltzustände der Gatter 29 und 31 und des Schalters 33 bleiben jedoch unverändert, da Gatter 29 und 31 in Selbsthalteschaltung miteinander verbunden sind. Diese Selbsthaltung wird erst aufgehoben, wenn Taktsignal 38 von 0 auf 1 geht. Ausgang 47 von Gatter 31 blockiert außerdem Gatter 30 und verhindert das Einschalten von Schalter 32. Die Gatterschaltung ist symmetrisch aufgebaut. Schalter 32 und 33 sind nie gleichzeitig eingeschaltet. Schalter 32 schaltet die Magnetspule $L_{8;\,8a}$ über den niederohmigen Meßwiderstand 21 an Masse, während Schalter 33 die Magnetspule $L_{9;\,9a}$ schaltet. Nach dem Einschalten steigt der Erregerstrom in der betreffenden Spule kontinuierlich an. Damit die mittlere Magnetkraft eines Zugmagneten bei dynamischer Erregung unabhängig von der momentanen Luftspaltgröße ist, muß der ohmsche Spannungsabfall im Erregerkreis Null sein. Zu seiner Kompensation wird der Erregerstrom mit dem niederohmigen Meßwiderstand 21 gemessen. Die Meßspannung 60 wird im Verstärker 20 verstärkt und mittels Summierer 16 zur Referenzspannung 45 addiert. Der Additionswert entspricht damit dem ohmschen Spannungsabfall im Erregerkreis. Wenn das Taktsignal 38 von 0 auf 1 schaltet, werden die Schalter 24 und 32 bzw. 33 geöffnet. Der Erregerstrom wird jetzt von der Spulen-EMK getrieben und fließt von Masse über den Meßwiderstand 21, Diode 36, die Magnetspule $L_{8;\,8a}$ bzw. $L_{9;\,9a}$ und Diode 34 bzw. 35 zur Treiberausgangsspannung 39. Die Stromumkehr im Meßwiderstand 21 bedeutet eine Vorzeichenänderung für die stromabhängige Spannungskomponente 46, die jetzt von der Referenzspannung 45 subtrahiert wird. Die Subtraktion ist erforderlich, da sich in der zweiten Takthälfte der ohmsche Spannungsabfall im Erregerkreis als Gegenspannung auswirkt, ebenso wie die Treiberausgangsspannung 39 als Gegenspannung wirkt. Die gesamte Spulengegenspannung ist außerdem um den Betrag der beiden Diodenspannungen von Diode 36 und 34 bzw. 35 größer als die Spulen-Erregerspannung. Dadurch nimmt der Strom etwas rascher ab, als er

3

ansteigt, damit bei Beginn des neuen Taktes der Spulenstrom sicher Null ist.

## Patentansprüche

1. Verfahren zur Bestimmung einer auf einen in definierter Art und Weise translatorisch oder rotatorisch beweglich gelagerten Körper (1; 1a) einwirkenden Kraft (F), dadurch gekennzeichnet, daß zwei zum beweglichen Körper (1; 1a) stationär angeordnete und auf diesen mit ihren magnetischen Kräften (F54; F54a und F55; F55a) einwirkenden Elektromagnete (4; 4a und 5; 5a) von einem konstanten Zeittaktsignal (38) so getaktet werden, daß jeweils einer der Elektromagnete (4; 4a oder 5; 5a) erregt ist und zu Beginn eines jeden neuen Zeittaktes entschieden wird, welcher der Magnete (4; 4a bzw. 5; 5a) während des neuen Taktes erregt sein wird mit der Maßgabe, denjenigen Magneten anzusteuern, der den beweglichen Körper (1; 1a) zunächst in Richtung auf seine Nullposition (10; 10a) hin bewegt, wobei die Erregung der Magnete so erfolgt, daß jeder Magnet auf den Körper (1; 1a) mit gleich großer aber gegensinnig gerichteter Kraft (F54; F54a bzw. F55: F55a) wirkt und die mittlere Kraft pro Zeittakt unabhängig von der momentanen Position bzw. Bewegung des Körpers (1; 1a) in bezug auf seine Nullage ist und konstant gehalten wird, wobei die Taktansteuerfrequenz eines der Magneten zur Bestimmung der von außen auf den Körper (1; 1a) einwirkenden Kraft ausgewertet wird.

2. Verfahren nach Anspruch 1, dadurch gekennzeichnet, daß zur dynamischen Fesselung des Körpers (1; 1a) und zur Erkennung seiner Position zu Beginn jedes Zeittaktes (38) die Position des Körpers (1; 1a) in bezug auf seine Nullposition (10; 10a) durch Vergleich der Stromanstiegsgeschwindigkeiten in beiden Elektromagneten (4; 4a und 5; 5a) nach einer Spannungsbeaufschlagung bestimmt wird, wobei die Meßstromanstiegsgeschwindigkeiten ein Maß für die Luftspalte (6; 6a und 7; 7a) der magnetischen Kreise der Elektromagneten (4; 4a und 5; 5a) darstellen und derjenige Magnet, dessen Meßstrom als erster eine vorgegebene Schaltschwelle erreicht hat, eingeschaltet wird, während gleichzeitig das Einschalten des anderen Magneten während des laufenden Zeittaktes verhindert wird, so daß die Magnete praktisch im Zeitmultiplexverfahren zur Positionsbestimmung und zur Krafterzeugung betrieben werden, wobei Meßzeit und Meßstrom vernachlässigbar klein sind in bezug auf die Zeittaktlänge und Fesselungsbestromung.

3. Verfahren nach Anspruch 1, dadurch gekennzeichnet, daß die Ansteuerung der Elektromagneten mit einer aufgeprägten Spannung erfolgt, die jeweils nach der halben Taktzeit umgepolt wird, so daß sich ein von Null kontinuierlich ansteigender und nach erfolgter Umpolung ein ebenso kontinuierlich abfallender Stromverlauf pro Zeiteinheit ergibt, dessen Änderungsrate sich aus der Höhe der angelegten Spannung und der Spuleninduktivität ergibt, wobei die angelegte Gegenspannung während der zweiten Takthälfte gegenüber der während der ersten Takthälfte aufgeprägten Erregerspannung um einen konstanten Betrag höher liegt, der mindestens so groß gewählt wird, daß trotz einer möglichen Verkleinerung des Luftspaltes des magnetischen Kreises durch die Bewegung des Körpers (1; 1a) in der geführten Bewegungsrichtung (11; 11a) während eines Zeittaktes und der damit einhergehenden Erhöhung der Spuleninduktivität und Verlangsamung der Stromänderungsrate der Strom innerhalb der zweiten Takthälfte wieder auf Null gebracht wird.

4. Verfahren nach Anspruch 1 oder 3, dadurch gekennzeichnet, daß der Spannungsabfall über dem ohmschen Widerstand des Erregerkreises durch fortlaufende Addition in der ersten Takthälfte bzw. Subtraktion in der zweiten Takthälfte einer entsprechenden erregerstromproportionalen Spannungskomponente zur angelegten Erregerspannung bzw. Erregergegenspannung kompensiert wird.

5. Frequenzabhängiger Kraftwandler zur Durchführung des Verfahrens nach den Ansprüchen 1 bis 4 mit einem beweglich gelagerten Trägheitskörper (1; 1a) dadurch gekennzeichnet, daß an dem beweglich gelagerten Trägheitskörper beidseitig ferromagnetische Joche (2; 2a und 3; 3a) befestigt sind, über die die Zugkräfte zweier stationärer Elektromagnete (4; 4a und 5; 5a) auf den Trägheitskörper (1; 1a) übertragen werden, daß die Kernspulen (8; 8a und 9; 9a) der Elektromagnete (4; 4a und 5; 5a) von einer Elektronikeinheit (58) taktweise erregt werden und daß die Ansteuerungs-Taktfrequenz (37) eines von zwei elektronischen Schaltern (32; 32a, 33; 33a) zur Einschaltung der Erregerströme der Elektromagnete (4; 4a, 5; 5a) als ein Maß für die von außen einwirkende Kraft mit einem Frequenzzähler (18) ausgewertet wird.

6. Kraftwandler nach Anspruch 5, dadurch gekennzeichnet, daß der Taktgenerator (15) ein Rechtecksignal (38) mit einem Tastverhältnis von 0,5 erzeugt, das den elektronischen Schalter (24) über einen Inverter (25) einschaltet, wenn das Taktsignal (38) Null ist, wodurch beide Magnetspulen (8; 8a, 9; 9a) an die Erregerspannung (39) gelegt werden, so daß sich über den Schalter (24) in den Magnetspulen (8; 8a, 9; 9a) und in hochohmigen Meßwiderständen $R_{22}$ bzw. $R_{23}$ Meßströme ausbilden, die nach einer Exponentialfunktion mit den Zeitkonstanten

$$T_{4; 4a} = L_{8; 8a}/R_{22} \qquad L_{8; 8a} - \text{Induktivität der Kernspule (8; 8a)}$$
bzw.
$$T_{5; 5a} = L_{9; 9a}/R_{23} \qquad L_{9; 9a} - \text{Induktivität der Kernspule (9; 9a)}$$

ansteigen, wobei $L_{8; 8a}$ und $L_{9; 9a}$ abhängig sind vom jeweiligen Luftspalt (6; 6a bzw. 7; 7a) der von den Kernspulen und den Jochen (2; 2a bzw. 3; 3a) des Körpers (1; 1a) gebildet wird, und die an den Meßwiderständen (22, 23) abgegriffen werden und Komparatoren (26, 27) zugeführt werden, die ihre Ausgänge (40, 41) bei Erreichen eines Referenzwertes (42) auf »eins« schalten und mit ihrem Ausgang eine Gatter-Kippschaltung triggern, die aus den Gattern (28 bis 31) besteht und die Aufgabe hat, die elektronischen Schalter (32, 33) so anzusteuern, daß nur der Schalter eingeschaltet wird, dessen zugeordnetes Strommeßsignal (43 bzw. 44) als erstes den Referenzwert (42) des betreffenden Komparators (26 bzw. 27) erreicht hat, und dieser Schalter nachfolgend bis zum Ende der ersten Takthälfte vom Taktsignal (38) in eingeschaltetem Zustand gehalten wird, während gleichzeitig der zweite Schalter über die gesamte Taktzeit unterbrochen bleibt, so daß sich jeweils nur in einer der Spulen (8; 8a oder 9; 9a) ein Kraftstrom ausbilden kann, der in der ersten Takthälfte, wenn das Taktsignal (38) Null ist, von Erregerspannung (39) über Schalter (24), Magnetspule (8; 8a bzw. 9; 9a), Schalter (32 bzw. 33) und Widerstand (21) nach Masse fließt und in der zweiten Takthälfte, wenn das Taktsignal (38) »eins« ist und die Schalter (24, 32 und 33) geöffnet sind, von der Spulen-EMK getrieben wird und von Masse über den Widerstand (21), Diode (36), Spule (8; 8a bzw. 9; 9a) und Diode (34 bzw. 35) zur nun als Gegenspannung wirkenden Treiberausgangsspannung (39) fließt, wodurch sich eine Spulengegenspannung ausbildet, die um die beiden Diodenspannungen von Diode (36) und Diode (34) bzw. Diode (35) größer ist als die Spulenerregerspannung in der ersten Takthälfte, wenn das Taktsignal (38) Null ist.

7. Kraftwandler nach Anspruch 5 oder 6, dadurch gekennzeichnet, daß die Erregerspannung bzw. Gegenspannung (39) mittels Summierer (16) aus der Summe zweier Spannungen gebildet wird, wobei die eine die Konstantspannung (45) der Referenzspannungsquelle (14) ist und die andere die erregerstromproportionale Spannungskomponente (46) ist, die über den Widerstand (21) gebildet und mit einem Verstärkungsfaktor (A) im Verstärker (20) so verstärkt wird, daß ihr Wert dem gesamten ohmschen Spannungsabfall im Erregerkreis entspricht, wobei sich die Spannungskomponente (46) in der ersten Takthälfte positiv und in der zweiten Takthälfte negativ ausbildet, bedingt durch die schaltungstechnisch erzwungene Stromumkehr im Widerstand (21) bei gleichbleibender Stromrichtung in der erregten Magnetspule (8; 8a bzw. 9; 9a).

## Claims

1. Method for defining a force (F) effecting on a body (1; 1a) being longitudinally or rotatably movably located in a definite manner, characterized in that two electromagnets (4; 4a and 5; 5a) being stationary positioned with respect to the movable body (1; 1a) and effecting thereto through their magnetic forces (F54; F54a and F55; F55a) are clock-operated by a constant clock control signal (38) in such a way that always one of the electromagnets (4; 4a or 5; 5a) is excited and that it is decided at the beginning of each clock-puls, which of the magnets (4; 4a resp. 5; 5a) is excited during the new clock-puls in order to drive that magnet which moves the movable body (1; 1a) at first in the direction to its zero-position, whereby the magnets are excited in such a way that each magnet is effective on the body (1; 1a) with the same but oppositly directed force (F54; F54a resp. F55; F55a) and that the medium force per clock-puls is independent from the momentary position or movement, respectively, of the body (1; 1a) with respect to its zero-position and is maintained constant, wherein the clock-driving frequency of one of the magnets is used for the destination of the force being effective on the body (1; 1a) from outside.

2. Method according to claim 1, characterized in that for the dynamic fettering of the body (1; 1a) and for recognizing its position at the beginning of each clock-puls (38) the position of the body (1; 1a) with respect to its zero-position (10; 10a) is determined by comparing the speed of the current increase in both electromagnets (4; 4a and 5; 5a) after initiating voltage, wherein the speeds of measurement current increase are a measure for the air gaps (6; 6a and 7; 7a) of the magnetic circuits of the electromagnets (4; 4a and 5; 5a) and that magnet which measurement current is reaching first a definite switching threshold, is switched on, wheras simultaneously the switching on of the other magnet is hindered during the running clock-puls so that the magnets are actually operated with the time-multiplex method for determination of position and for producing energy, wherein the measurement time and the measurement current are small with respect to the duration of the clock-puls and the current for fettering.

3. Method according to claim 1, charakterized in that the drive of the electromagnets ist effected by an induced voltage, with is pole-reversed always after the half clock-puls so that a current course per time unit is received increasing continuously from zero and decreasing similarly continuously after the pole-reversal has been effected wherin the rate of change is received from the height of the connecting voltage and the inductance of the coil, whereby the connecting back-voltage is higher by a constant amount during the second half of the clock-puls with respect to the connecting exciting voltage during the first half of the clock-puls which amount is selected to be at least so high that besides a possible diminution of the air gap of the magnetic circuit by the movement of the body (1; 1a) in conducted direction of movement (11; 11a) during a clock-puls and the increase of coil the decrease of the current change rate the current is again brought within the second half of the clock-puls to zero.

4. Method according to claim 1 or 3, characterized in that the voltage decrease through the active resistence of the exciting circuit is compensated by proceeding addition in the first half of the clock-puls or subtraction in the second half of the clock-puls, respectively, of a corresponding component of the voltage which is exciting current proportional to the connecting exciting current or back-exciting current, respectively.

5. Frequency-dependent force converter for procuring the method according to the claims 1—4, provided with a movably located inertiabody (1; 1a), characterized in that at both sides of the movably positioned inertiabody ferromagnetical yokes (2; 2a and 3; 3a) are fixed, through which the tractive forces of two stationary electromagnets (4; 4a and 5; 5a) are transferred to the inertiabody (1; 1a), that the core coils (8; 8a and 9; 9a) of the electromagnets (4; 4a and 5; 5a) are excited pulswise by an electronic unit (58) and that the driving clock frequency (37) of one of two electronic switches (32; 32a, 33; 33a) for the switch-on of the exciting currents of the electromagnets (4; 4a, 5; 5a) is evaluated with a frequency counter (18) as a measure for the force effecting from outside.

6. Force-converter according to claim 5, characterized in that the pulse generator (15) produces a rectangular signal (38) having a key relationship of 0.5, which signal switches on through an inverter (25) an electronical swith (24), when the clock-signal (38) is zero, whereby both magnetic coils (8; 8a, 9; 9a) are connected to the exciting voltage (39) so that through the swit (24) in the magnetic coils (8; 8a, 9; 9a) and in the highly omic measurement resistors ($R_{22}$ and $R_{23}$, resp.) measuring currents are produced increasing according to an exponential function with the time constant

$$T_{4; 4a} = L_{8; 8a}/R_{22} \qquad L_{8; 8a} - \text{inductance of the core coil (8; 8a)}$$
respectively
$$T_{5; 5a} = L_{9; 9a}/R_{23} \qquad L_{9; 9a} - \text{inductance of the core coil (9; 9a)}$$

wherein $L_{8; 8a}$ and $L_{9; 9a}$ are formed in dependency from the corresponding air gap (6; 6a resp. 7; 7a) of the core coils and the yokes (2; 2a resp. 3; 3a) of the body (1; 1a) and which measuring currents are obtained at the measuring resistors (22, 23) and are fed to comparators (26, 27) switching their outputs (40, 41) on reaching a reference value (42) to »one« and triggering with their output a gate-trigger circuit, consisting of the gates (28—31) and having the object to drive the electronic circuit (32, 33) in such a way that only that switch is switched on, the related current measuring signal (43 resp. 44) of which is reaching at first the reference calue (42) of the corresponding comparator (26 resp. 27), and keeping that switch later-on until the end of the first half of the clock by a clock-signal (38) in switched-on-condition, whereby simultaneously the second switch is maintained switched off during the whole clock-time so that always only in one of the coils (8; 8a or 9; 9a) an energy current is produced which flows in the first half of the clock, when the clock-signal (38) ist zero, from exciting voltage (39) through switch (24), magnetic coil (8; 8a resp. 9; 9a) switch (32 resp. 33) and resistor (21) to mass and flows in the second half of the clock, when a clock-signal (38) is »one« and the switches (24, 32 and 33) are opened, driven by the electromagnetic force of the coil, from mass through a resistor (21), diode (36), coil (8; 8a resp. 9; 9a) and diode (34 resp. 35) to the driving output voltage (39) functioning only as back-voltage, whereby a coil back-voltage is produced which is by both of the diode voltages greater from diode (36) to diode (34) respectively diode (35) than the coil exciting voltage in the first half of the clock, when the clock-signal (38) is zero.

7. Force converter according to claim 5 or 6, characterized in that the exciting voltage or back-voltage (39) respectively, is formed by means of a summarizer (16) from the sum of two voltages, one of which is the constant voltage (45) of the reference voltage source (14) and whereas the voltage component (46) being proportional to the exciting current, which component is produced through the resistor (21) and is amplified by an amplification factor (A) in the amplifier (20) so that its value corresponds to the whole omic voltage decrease within the exciting circuit, whereby the voltage componente (46) is positive in the first half of the clock and negative in the second half of the clock, caused by the force current reversal in the resistor (21) because of circuit-technical reasons maintaining the current direction in the excited magnetic coil (8; 8a resp. 9; 9a).

## Revendications

1. Procédé pour la détermination d'une force (F) agissant sur un corps (1; 1a) monté de façon à pouvoir se déplacer de façon définie en translation ou en rotation, caractérisé en ce que deux électro-aimants (4; 4a et 5; 5a) disposés à poste fixe par rapport à ce corps mobile (1; 1a) et agissant sur lui par leurs forces magnétiques (F54; F54a et F55; F55a) sont actionnés par un signal d'impulsion chronométrique constant (38) de façon telle qu'à chaque fois l'un de ces électro-aimants (4; 4a ou 5; 5a) soit excité et qu'au début de chaque nouvelle impulsion il soit décidé lequel de ceux-ci (4; 4a, respectivement 5; 5a) sera excité lors de la nouvelle impulsion, avec cette caractéristique de commander celui qui déplace le corps (1; 1a) tout d'abord en direction de sa position nulle (10; 10a) cette

6

excitation des électro-aimants s'effectuant de manière telle que chacun d'eux agisse sur le corps (1; 1a) avec une force de même valeur, mais orientée en sens inverse (F54; F54a, respectivement F55; F55a) et que la force moyenne par impulsion chronométrique soit indépendante de la position momentanée, respectivement du déplacement du corps (1; 1a) par rapport à sa position nulle et soit maintenue constante, tandis que la fréquence de commande de l'un des électro-aimants est prise pour base en vue de la détermination de la force qui agit sur le corps (1; 1a) à partir de l'extérieur.

2. Procédé suivant la revendication 1, caractérisé en ce que pour la liaison dynamique du corps (1; 1a) et pour la connaissance de sa position au début de chaque impulsion chronométrique (38) on détermine la position de celui-ci (1; 1a) par rapport à sa position nulle (10; 10a) par comparaison des vitesses de montée des intensités de courant dans les deux électro-aimants (4; 4a et 5; 5a) après une mise sous tension, les vitesses ainsi déterminées représentant une mesure pour les entrefers (6; 6a et 7; 7a) des circuits magnétiques de ces électro-aimants (4; 4a et 5; 5a) et celui de ces derniers dont l'intensité de courant a atteint en premier un seuil pré-déterminé étant mis en circuit, tandis qu'en même temps la mise en circuit de l'autre est empêchée pendant l'impulsion chronométrique en cours, de sorte que pratiquement ces électro-aimants sont actionnés suivant un processus chronométrique multiplex pour la détermination de la position et pour l'obtention d'une force, le temps de mesure et le courant correspondant étant de valeur négligeable par rapport à la durée des impulsions chronométriques et au courant de maintien.

3. Procédé suivant la revendication 1, caractérisé en ce que la commande des électro-aimants s'effectue à l'aide d'une tension imposée dont la polarité est inversée à chaque demi-temps d'impulsion, de sorte qu'il en résulte pour l'intensité du courant une allure qui va en croissant de façon continue à partir de zéro et qui s'abaisse également de manière continue après l'inversion, son coefficient de variation dépendant de la valeur de la tension imposée et de l'inductance des bobines, tandis que la contre-tension appliquée durant la seconde moitié de ce temps d'impulsion se situ à un niveau supérieur d'une valeur constante à celui de la tension imposée durant la première moitié du temps précité, cette valeur étant choisie assez forte pour qu'en dépit d'une éventuelle réduction de l'entrefer du circuit magnétique du fait du déplacement du corps (1; 1a) dans la direction du guidage (11; 11a) pendant la durée d'une impulsion, par conséquent de l'augmentation de l'inductance des bobines qui en résulte ainsi que du ralentissement du taux de variation de l'intensité, cette dernière soit ramenée à zéro au cours de la seconde moitié dudit temps d'impulsion.

4. Procédé suivant la revendication 1 ou 3, caractérisé en ce qu'on compense la chute de tension due à la résistance ohmique du circuit d'excitation par l'addition continue à la tension d'excitation durant la première moitié du temps d'impulsion, respectivement la soustraction de la contre-tension d'excitation pendant la seconde moitié de celui-ci, d'une composante de tension correspondante proportionnelle à la tension d'excitation appliquée, respectivement la contre-tension d'excitation.

5. Convertisseur de force agissant en fonction de la fréquence pour la mise en œuvre du procédé suivant les revendications 1 à 4, avec un corps (1; 1a) comportant de l'inertie et monté de façon mobile, caractérisé en ce que sur ce corps, de l'un et l'autre côté de celui-ci sont fixées des armatures ferromagnétiques (2; 2a et 3; 3a) par l'intermédiaire desquelles les forces de traction de deux électro-aimants fixes (4; 4a et 5; 5a) sont appliquées audit corps (1; 1a), en ce que les bobines de noyaux (8; 8a et 9; 9a) de ces électro-aimants (4; 4a et 5; 5a) sont excitées par impulsions à partir d'une unité électronique (58) et en ce que la fréquence de commande (37) par ces impulsions de l'un de deux interrupteurs électroniques (32; 32a, 33; 33a) destinés à l'application du courant d'excitation des électro-aimants (4; 4a, 5; 5a), est utilisée à l'aide d'un fréquencemètre comme une mesure pour la force agissant à partir de l'extérieur.

6. Convertisseur de force suivant la revendication 5, caractérisé en ce que le générateur d'impulsions (15) émet un signal rectangulaire (38) avec un rapport de tâtage de 0,5 et que l'interrupteur électronique (24) déclenche à travers un inverseur (25) lorsque ce signal (38) est nul, grâce à quoi les deux bobines (8; 8a, 9; 9a) des électro-aimants sont reliées à la tension d'excitation (39), de sorte qu'il s'établit à travers l'interrupteur électronique (24) dans les bobines précitées (8; 8a, 9; 9a) et dans des résistances de mesure ($R_{22}$, respectivement $R_{23}$) de valeur ohmique élevée, des courants dont l'intensité croît suivant une fonction exponentielle avec les constantes de temps:

$$T_{4;\,4a} = L_{8;\,8a}/R_{22} \qquad L_{8;\,8a} - \text{inductance de la bobine de noyau (8; 8a)}$$
respectivement
$$T_{5;\,5a} = L_{9;\,9a}/R_{23} \qquad L_{9;\,9a} - \text{inductance de la bobine de noyau (9; 9a)}$$

expressions dans lesquelles $L_{8;\,8a}$ et $L_{9;\,9a}$ dépendent de l'entrefer (6; 6a respectivement 7; 7a) réalisé par les bobines de noyau et les armatures (2; 2a, respectivement 3; 3a) du corps (1; 1a) lesquels courants sont mesurés par des résistances de mesure (22, 23) et sont amenés à des comparateurs (26, 27) dont les sorties (40, 41) passent à »un« lorsqu'on atteint une valeur de référence (42), la sortie de ces comparateurs déclenchant un circuit basculant constitué par des portes (28 à 31) et qui a pour rôle de commander les interrupteurs électroniques (32, 33) de façon telle que seul se ferme celui dont le signal (43, respectivement 44) qui lui correspond atteint le premier la valeur de référence (42) du comparateur concerné (26, respectivement 27), et que cet interrupteur soit ensuite maintenu à l'état fermé jusqu'à la fin de la première moitié de la durée du signal d'impulsion (38), tandis que simultanément le second interrupteur demeure ouvert pendant toute cette durée, de sorte qu'à chaque fois il ne puisse s'établir que dans l'une des bobines (8; 8a ou 9; 9a) un courant de puissance qui, durant la première moitié de l'impulsion, lorsque le signal correspondant (38) est nul, s'écoule à la masse à partir de la tension d'excitation (39) à travers l'interrupteur (24), la bobine d'électro-aimant (8; 8a, respectivement 9; 9a), l'interrupteur (32, respectivement 33) et la résistance (21), et que durant la seconde moitié de ladite impulsion, alors que le signal d'impulsion (38) est »un« et que les interrupteurs (24, 32 et 33) sont ouverts, ce courant est provoqué par la self-induction des bobines et s'écoule à partir de la masse à travers la résistance (21), la diode (36), la bobine (8; 8a, respectivement 9; 9a) et la diode (34, respectivement 35) comme tension de sortie (39) de l'entraîneur n'agissant qu'à titre de contre-tension, grâce à quoi il s'établit une telle contre-tension de bobine qui est plus élevée d'une quantité égale aux tensions de la diode (36) et de la diode (34), respectivement de la diode (35), que la tension d'excitation de bobine durant la première moitié de l'impulsion, lorsque le signal (38) correspondant à celle-ci est nul.

7. Convertisseur suivant la revendication 5 ou 6, caractérisé en ce que la tension d'excitation, respectivement la contre-tension d'excitation (39), est établie par un totalisateur (16) à partir de la somme de deux tensions, dont l'une est la tension constante (45) de la source de référence (14) et dont l'autre est une composante (46) proportionnelle à la tension d'excitation précitée, qui apparaît sur une résistance (21) et qui est amplifiée dans un amplificateur (20) avec un coefficient d'amplification (A) de manière telle que sa valeur corresponde à la chute de tension ohmique dans le circuit d'excitation, cette composante (46) étant établie positive durant la première moitié de l'impulsion et négative durant la seconde, comme cela est imposé par l'inversion du courant dans la résistance (21), conformément à la technique des circuits, pour un sens de passage inchangé du courant de la bobine d'électro-aimant excitée (8; 8a, respectivement 9; 9a).

ELEKTRONIKEINHEIT: 58

FIG. 1

0 048 305

FIG. 2

$\overline{F} = \overline{F54}$ — f37

$\overline{F} = \frac{3}{4}\overline{F54}$ — f37 = 7/8 f39

$\overline{F} = \frac{2}{4}\overline{F54}$ — f37 = 6/8 f39

$\overline{F} = \frac{1}{4}\overline{F54}$ — f37 = 5/8 f39

$\overline{F} = 0$ — f37 = 4/8 f39

$\overline{F} = -\frac{1}{4}\overline{F54}$ — f37 = 3/8 f39

$\overline{F} = -\frac{2}{4}\overline{F54}$ — f37 = 2/8 f39

$\overline{F} = -\frac{3}{4}\overline{F54}$ — f37 = 1/8 f39

$\overline{F} = -\overline{F54}$ — f37 = 0

FIG.3

FIG. 4